# EUROPEAN PATENT APPLICATION

(11) **EP 2 922 188 A1**
(43) Date of publication of application: **23.09.2015**
(21) Application number: 13855715.2
(22) Date of filing: 05.11.2013
(51) Int. Cl.: H02K 16/02, B60L 11/14, H02K 1/27

(54) **VEHICLE DRIVE DEVICE**

(30) Priority: 15.11.2012 JP 2012251458
(71) Applicant: Kabushiki Kaisha Toyota Jidoshokki, Kariya-shi, Aichi 448-8671 (JP)
(72) Inventor: MATSUMOTO, Shohei, Kariya-shi Aichi 448-8671 (JP); KUBO, Hidehito, Kariya-shi Aichi 448-8671 (JP); HAYASHI, Hirohito, Kariya-shi Aichi 448-8671 (JP); UETSUJI, Kiyoshi, Kariya-shi Aichi 448-8671 (JP); YUMOTO, Shuji, Kariya-shi Aichi 448-8671 (JP); YOSHIHARA, Koji, Kariya-shi Aichi 448-8671 (JP); FUJIWARA, Hirofumi, Kariya-shi Aichi 448-8671 (JP)
(74) Representative: TBK
(86) International application number: PCT/JP2013/079867
(87) International publication number: WO 2014/077153

(57) **Abstract**

When sub-field magnets 8a and 8b are not provided, the magnetic fluxes that pass through main field magnets 7a and 7b respectively and interlink with stator windings 5 and first rotor windings 6, and the magnetic fluxes that pass through the main field magnets 7a and 7b respectively and short-circuit adjacent main field magnets 7b' and 7a' are generated. The short-circuited magnetic fluxes do not contribute to torque generation, therefore a favorable inner periphery magnetic circuit is not formed, and the torque received between a second rotor 4 and a first rotor 3 becomes small. When sub-field magnets 8a and 8b are provided, on the other hand, the short-circuited magnet fluxes interlink with the first rotor windings 6 by the sub-field magnets 8a and 8b, and an inner periphery magnetic circuit is formed, whereby the motor driving torque received between the second rotor 4 and the first rotor 3 increases.

## Description

### TECHNICAL FIELD

The present invention relates to a vehicle drive apparatus, and more particularly to a vehicle drive apparatus that includes a stator, a first rotor and a second rotor, with main field magnets and sub-field magnets being provided in the second rotor.

### BACKGROUND ART

Patent Document 1 discloses a conventional vehicle drive apparatus that has a first rotor and a second rotor (double rotor motor). This vehicle drive apparatus is disposed in a vehicle, and includes: a stator that has stator windings disposed in the outermost periphery of the motor; a first rotor that is disposed in the innermost periphery of the motor, including rotor windings, and is driven by the engine; and a second rotor that is disposed between the stator and the first rotor, that has a field magnet, and drives the wheels. According to one of the embodiments of this vehicle drive apparatus, the second rotor holds main field magnets, inner periphery sub-field magnets, and outer periphery sub-field magnets. The outer periphery field is generated by the main field magnets and the outer periphery sub-field magnets, and an outer periphery magnetic circuit is formed between the outer periphery field and the stator. The inner periphery field is generated by the main field magnets and the inner periphery sub-field magnets, and an inner periphery magnet circuit is formed between the inner periphery field and the first rotor. According to another one of the embodiments of this vehicle drive apparatus, the second rotor has outer periphery main field magnets and inner periphery main field magnets. The outer periphery field is generated by the outer periphery main field magnets, and an outer periphery magnetic circuit is formed between the outer periphery field and the stator. The inner periphery field is generated by the inner periphery main field magnets, and an inner periphery magnetic circuit is formed between the inner periphery field and the first rotor. In both of these embodiments, the second rotor and the stator function as an outer motor using the magnetic torque generated by the magnetic circuit formed between the second rotor and the stator, and the second rotor and the first rotor function as an inner motor using the magnetic torque generated by the magnetic circuit formed between the second rotor and the first rotor.

[Patent Document 1] Japanese Patent Application Laid-open No. 2000-50585 (Fig. 2, Fig. 9)

### SUMMARY OF INVENTION

However, in the embodiment where the second rotor holds the main field magnets, the inner periphery sub-field magnets and the outer periphery sub-field magnets in the drive apparatus described in Patent Document 1, there are various cases in which magnetic flux passes through a rotor yoke of the second rotor. When a part of the magnetic flux from the stator side bypasses a part of the rotor yoke of the second rotor and the adjacent two outer periphery sub-field magnets to form a closed magnetic circuit, the inner periphery field generated by the inner periphery sub-field magnets is cancelled by a revolving field generated by the first rotor windings, hence a strong magnetic torque is generated between the first rotor and the second rotor. On the other hand, when a part of the magnetic flux from the first rotor bypasses a part of the rotor yoke of the second rotor and the adjacent two inner periphery sub-field magnets to form a closed magnetic circuit, the outer periphery field generated by the outer periphery sub-field magnets is cancelled by a revolving field generated by the stator windings of the stator, hence a strong magnetic torque is generated between the second rotor and the stator. Therefore, the magnetic torque between the first rotor and the second rotor, which is the torque of the inner periphery magnetic circuit, does not always become high, and may not satisfy the required torque value of the inner periphery magnetic circuit. If the sizes of the inner periphery sub-field magnets are increased, the torque in the inner periphery could be increased, but in this case, the outer periphery torque may increase as well. In the same way, the torque between the second rotor and the stator, which is the torque of the outer periphery magnetic circuit, does not always become high, and may not satisfy the required torque value of the outer periphery magnetic circuit. Thus, in this embodiment, there is a problem that freely designing the outer periphery and inner periphery torque and improving the inner periphery torque are impossible.

In the embodiment where the second rotor holds the outer periphery main field magnets and the inner periphery main field magnets, the magnetic flux that passes through the inner periphery main field magnets forms a magnetic circuit with the adjacent inner periphery main field magnets. In the same way, the magnetic flux that passes through the outer periphery main field magnets forms a magnetic circuit with the adjacent outer periphery main field magnets. The outer periphery main field magnets are not used for forming the inner magnetic circuit, and the inner periphery main field magnets are not used for forming the outer magnetic circuit.

The present invention has been designed to solve these problems, and it is an object of the present invention to provide a vehicle drive apparatus that improves the torque of the inner periphery magnetic circuit or the outer periphery magnetic circuit and satisfies the required torque value without providing the main field magnets for the inner periphery and the outer periphery respectively.

A vehicle drive apparatus according to the present invention comprises: a stator that is fixed to a vehicle; a first rotor that is rotatably provided with respect to the stator; a plurality of first rotor windings that are provided along a circumferential direction of the first rotor; and a second rotor that is rotatably provided between the stator and the first rotor with respect to the stator, and that faces the stator on an outer peripheral surface forming an outer periphery field and faces the first rotor on an inner peripheral surface forming an inner periphery field, wherein the second rotor includes: a plurality of main field magnets, the magnet poles of which are in the radial direction to generate the outer periphery field and the inner periphery field; and a plurality of sub-field magnets which are provided in a position where a part of a magnetic flux passing through the main field magnets is interlinked with the first rotor windings, the magnetic pole directions thereof matching with each of the main field magnets, and wherein an inner periphery magnetic circuit is formed between the first rotor and the second rotor to receive torque therebetween, and an outer periphery magnetic circuit is formed between the second rotor and the stator to receive torque therebetween.

According to the present invention, in the vehicle drive apparatus that has the stator, the first rotor, the second rotor and the first rotor windings, the second rotor is provided with the main field magnets and a plurality of sub-field magnets the magnetic pole directions of which match with each of the main field magnets and which are disposed in positions where a part of the magnetic fluxes passing through the main field magnets are interlinked with the first rotor windings, whereby the torque of the inner periphery magnetic circuit or the outer periphery magnetic circuit can be improved, and the required torque value can be satisfied without providing the main field magnets for the inner periphery and the outer periphery respectively.

### BRIEF DESCRIPTION OF DRAWINGS

Fig. 1 is a partial end view of a vehicle drive apparatus according to an embodiment of the present invention;
Fig. 2 are partial end views of the vehicle drive apparatus according to the embodiment of the present invention;
Fig. 3 is a graph depicting the motor driving torque between the second rotor and the first rotor of the vehicle drive apparatus according to the embodiment of the present invention;
Fig. 4 is a graph depicting the motor driving torque between the stator and the second rotor of the vehicle drive apparatus according to the embodiment of the present invention; and
Fig. 5 are partial end views depicting modifications of the vehicle drive apparatus according to the embodiment of the present invention.

### DESCRIPTION OF THE EMBODIMENT

A configuration of a vehicle drive apparatus according to an embodiment of the present invention will now be described with reference to the accompanying drawings.

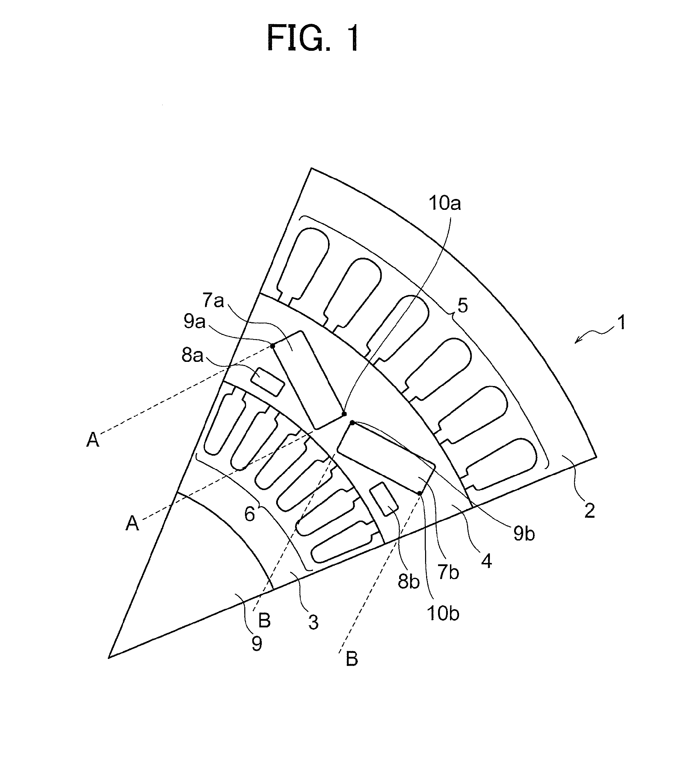

Fig. 1 shows the configuration of the vehicle drive apparatus according to the embodiment of the present invention. In double rotor motor 1 which is a vehicle drive apparatus, a cylindrical stator 2, a cylindrical first rotor 3, a cylindrical second rotor 4 and a first rotor rotary shaft 9 are provided. The stator 2 is fixed to the vehicle. The first rotor 3 is connected to the first rotor rotary shaft 9, and the first rotor rotary shaft 9 is connected to an engine output shaft (not shown) via an internal gear (not shown). In other words, the first rotor 3 is indirectly connected to the engine output shaft. The first rotor 3 has an outer diameter which is slightly smaller than the inner diameter of the second rotor 4, and is provided coaxially with the stator 2 in the double rotor motor 1 on the inner periphery side of the stator 2. The second rotor 4 has an outer diameter which is slightly smaller than the inner diameter of the stator 2, and is provided coaxially with the stator 2 between the stator 2 and the first rotor 3, and is connected to a drive shaft of the driving wheels (not shown) via an internal gear (not shown). In other words, the outer peripheral surface of the second rotor 4 faces the stator 2 and the inner peripheral surface thereof faces the first rotor 3.

A plurality of stator windings 5 are provided on the stator 2 along the circumferential direction thereof. The stator windings 5 face the second rotor 4. A plurality of first rotor windings 6 are provided on the first rotor 3 along the circumferential direction thereof. The first rotor windings 6 face the second rotor 4. The stator windings 5 and the first rotor windings 6 are connected to an electric control circuit (not shown) respectively. Main field magnets 7a and main field magnets 7b, which are permanent magnets, are provided on the second rotor 4. The main field magnets 7a and 7b are disposed such that two main field magnets 7a and 7b which are adjacent to each other in the circumferential direction form a pair in a V-shape with a space therebetween. A magnetic pole of polarity of each set of main field magnets 7a and 7b in the radial directly changes alternately, such that in a set of the main field magnets 7a and 7b, the outside in the radial direction is the N pole and in another set of main field magnets 7a and 7b adjacent to the above mentioned set in the circumferential direction, the outside in the radial direction is the S pole. A sub-field magnet 8a is provided inside the main field magnet 7a in the radial direction, and a sub-field magnet 8b is provided inside the main field magnet 7b. The directions of the magnetic poles of the sub-field magnets 8a and 8b match with the magnetic poles of the closest main field magnets 7a and 7b respectively. At least a part of the sub-field magnet 8a is disposed in an area between line A which is a line that extends inward or outward in the second rotor 4 from one end point 9a of the main field magnet 7a in the circumferential direction of the second motor 4 in parallel with the magnetic pole direction of the main field magnet 7a and line A which is a line that extends inward or outward in the second rotor 4 from the other end point 10a of the main field magnet 7a in the circumferential direction of the second rotor 4 in parallel with the magnetic pole direction of the main field magnet 7a. In the same way, at least a part of the sub-field magnet 8b is disposed in an area between line B which is a line that extends inward or outward in the second rotor 4 from one end point 9b of the main field magnet 7b in the circumferential direction of the second rotor 4 in parallel with the magnetic pole direction of the main field magnet 7b and line B which is a line that extends inward or outward in the second rotor 4 from the other end point 10b of the main field magnet 7b in the circumferential direction of the second rotor 4 in parallel with the magnetic pole direction of the main field magnet 7b.

Next, the operation of the vehicle drive apparatus according to Embodiment 1 of the present invention will be described.

An outer periphery field is generated in the outer periphery of the second rotor 4 of the double rotor motor 1 by the main field magnets 7a and 7b. Therefore, an outer periphery magnetic circuit is formed between the second rotor 4 and the stator 2, and the second rotor 4 receives torque and they function as an outer motor. An inner periphery field is generated in the inner periphery of the second rotor 4 by the main field magnets 7a and 7b and the sub-field magnets 8a and 8b. Therefore, an inner periphery magnetic circuit is formed between the second rotor 4 and the first rotor 3, and the first rotor 3 receives torque and they function as the inner motor.

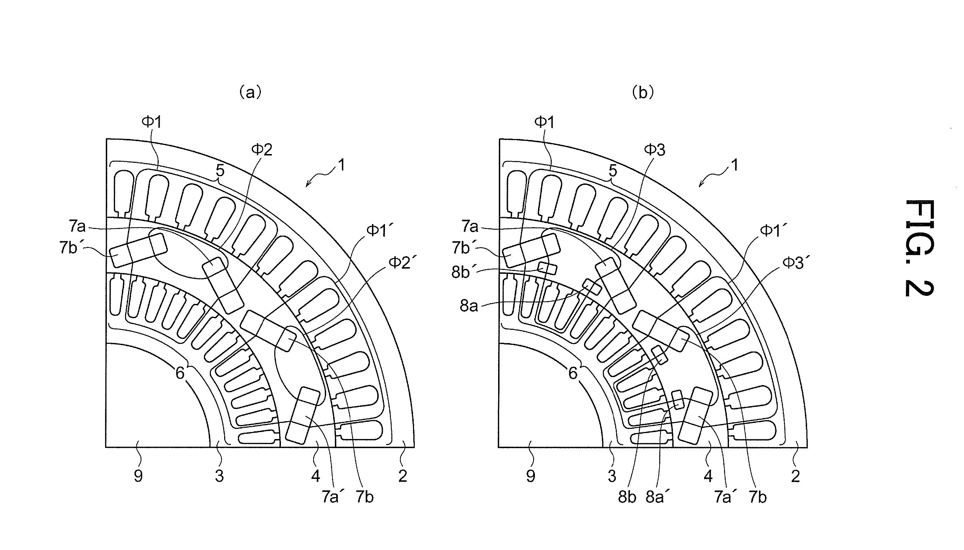

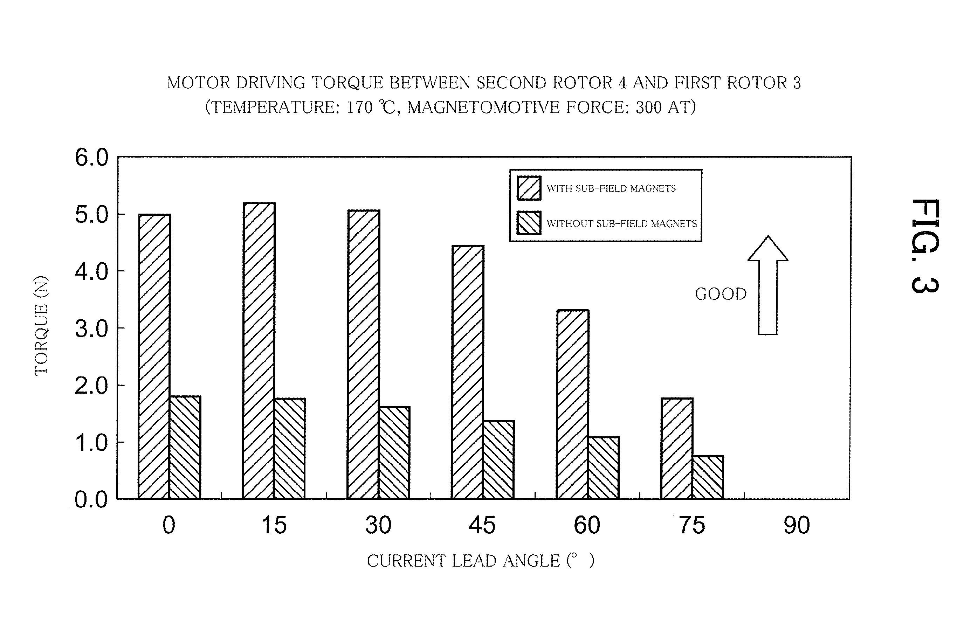

When the inner motor is driven, the paths of the magnetic flux change depending on whether the sub-field magnets 8a and 8b are provided or not. When the sub-field magnets 8a and 8b are not provided, the magnetic flux that passes through the main field magnets 7a and 7b respectively and interlinks with the stator windings 5 and the first rotor windings 6 as indicated by the curves Φ1 and Φ1' in Fig. 2(a) and the magnetic flux that passes through the main field magnets 7a and 7b respectively and short-circuits the adjacent main field magnets 7b' and 7a' as indicated by the curves Φ2 and Φ2' in Fig. 2(a) are generated. The magnetic fluxes indicated by the curves Φ2 and Φ2' do not contribute to the generation of torque, therefore a good inner periphery magnetic circuit is not formed, and the torque received between the second rotor 4 and the first rotor 3 becomes small. When the sub-field magnets 8a and 8b are provided, on the other hand, the magnetic fluxes Φ2 and Φ2' which are short-circuited in the case of Fig. 2(a) interlink with the first rotor windings 6 by the sub-field magnets 8a and 8b to form the inner periphery magnetic circuit as indicated by the curves Φ3 and Φ3' in Fig. 2(b). Thereby, as shown in Fig. 3, the motor driving torque received between the second rotor 4 and the first rotor 3 in each current lead angle becomes two to three times as high as the torque in the case when the sub-field magnets 8a and 8b are not provided.

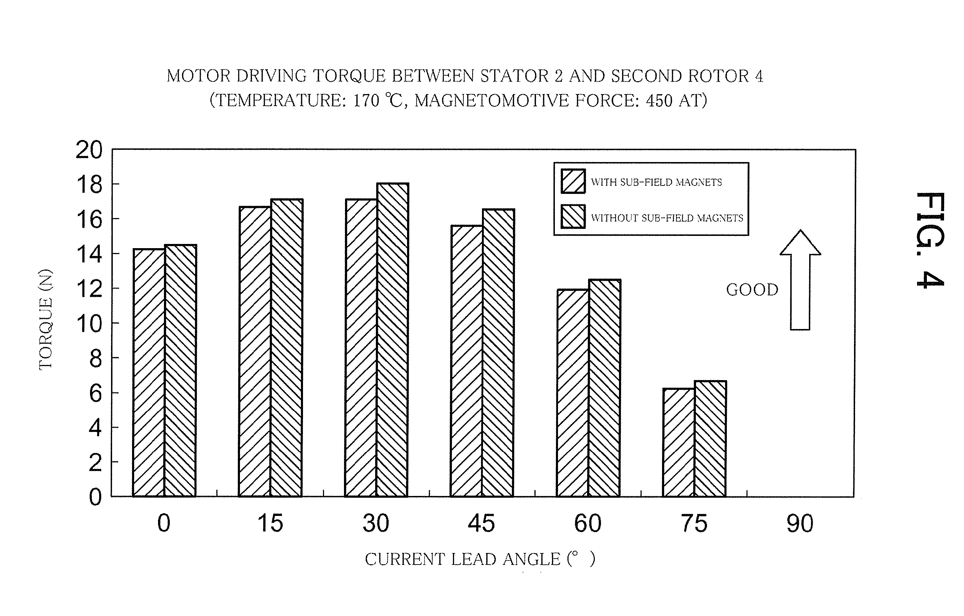

Even when the sub-field magnets 8a and 8b are provided, the motor driving torque received between the stator 2 and the second rotor 4 when the outer motor is driven does not increase, as shown in Fig. 4. Therefore, the torque received between the second rotor 4 and the first rotor 3 can be increased without increasing the motor driving torque received between the stator 2 and the second rotor 4.

Thus, in the double rotor motor 1 that has the stator 2, the first rotor 3, the second rotor 4 and the first rotor windings 6, the second rotor 4 is provided with the main field magnets 7a and 7b and a plurality of sub-field magnets 8a and 8b of which magnetic pole directions match with each of the main field magnets 7a and 7b and which are disposed in positions where a part of the magnetic fluxes passing through the main field magnets 7a and 7b are interlinked with the first rotor windings 6, whereby the torque of the inner periphery magnetic circuit or the outer periphery magnetic circuit is improved, and the required torque value can be satisfied without providing the main field magnets 7a and 7b for the inner periphery and the outer periphery respectively.

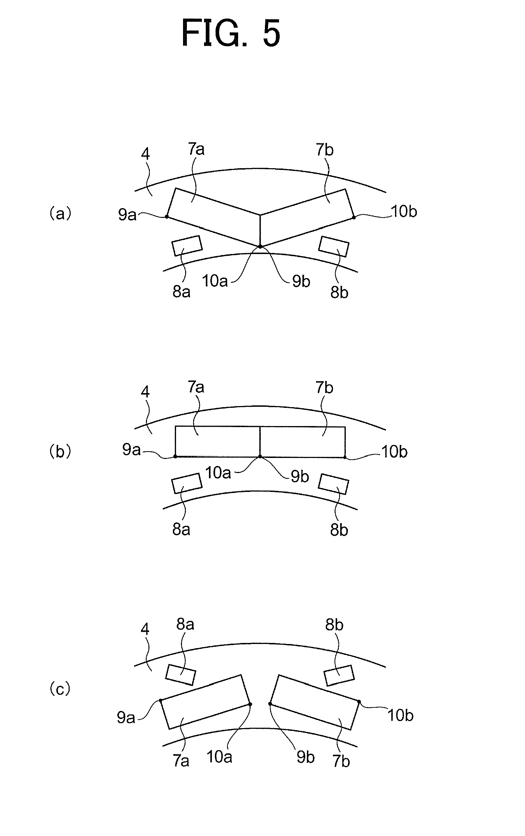

In this embodiment, the adjacent main field magnets 7a and 7b are disposed with a space therebetween. However, the adjacent main field magnets 7a and 7b may be non-linearly disposed without space. For example, the main field magnets 7a and 7b may be disposed in a V-shape as shown in Fig. 5(a), or in a U-shape. The main field magnets 7a and 7b may be disposed linearly as shown in Fig. 5(b). Further, when the required inner periphery torque is greater than the required outer periphery torque, the main field magnets 7a and 7b may be disposed inside in the radial direction and the sub-field magnets 8a and 8b may be disposed outside in the radial direction as shown in Fig. 5(c). In all of these cases, at least a part of the sub-field magnet 8a must be disposed in an area between line A that extends inward or outward in the second rotor 4 from one end point 9a of the main field magnet 7a in the circumferential direction of the second rotor 4 in parallel with the magnetic pole direction of the main field magnet 7a and line A that extends inward or outward in the second rotor 4 from the other end point 10a of the main field magnet 7a in the circumferential direction of the second rotor 4 in parallel with the magnetic pole direction of the main field magnet 7a. In the same manner, at least a part of the sub-field magnet 8b must be disposed in an area between line B that extends inward or outward in the second rotor 4 from one end point 9b of the main field magnet 7b in the circumferential direction of the second rotor 4 in parallel with the magnetic pole direction of the main field magnet 7b and line B that extends inward or outward in the second rotor 4 from the other end point 10b of the main field magnet 7b in the circumferential direction of the second rotor 4 in parallel with the magnetic pole direction of the main field magnet 7b. In this embodiment, two main field magnets 7a and 7b form a set, but three or more main field magnets may also form a set.

In this embodiment, the first rotor 3 is indirectly connected to the engine output shaft. However, the first rotor 3 and the engine output shaft may be directly connected. In the same manner, the second rotor 4 is indirectly connected to the driving shaft of the driving wheels in this embodiment. However, the second rotor 4 and the driving shaft of the driving wheels may be directly connected. Furthermore, the second rotor 4 may be directly or indirectly connected to the engine output shaft, and the first rotor 3 may be directly or indirectly connected to the driving shaft of the driving wheels.

## Claims

1. A vehicle drive apparatus, comprising:
a stator that is fixed to a vehicle;
a first rotor that is rotatably provided with respect to the stator;
a plurality of first rotor windings that are provided along a circumferential direction of the first rotor; and
a second rotor that is rotatably provided between the stator and the first rotor with respect to the stator, and that faces the stator on an outer peripheral surface forming an outer periphery field and faces the first rotor on an inner peripheral surface forming an inner periphery field, wherein the second rotor includes:
a plurality of main field magnets, the magnet poles of which are in the radial direction to generate the outer periphery field and the inner periphery field; and
a plurality of sub-field magnets which are provided in a position where a part of a magnetic flux passing through the main field magnet is interlinked with the first rotor windings, the magnetic pole directions thereof matching with each of the main field magnets, and
wherein an inner periphery magnetic circuit is formed between the first rotor and the second rotor to receive torque therebetween, and an outer periphery magnetic circuit is formed between the second rotor and the stator to receive torque therebetween.

2. The vehicle drive apparatus according to Claim 1, wherein at least a part of each sub-field magnet is disposed in an area between a line that extends inward or outward in the second rotor from one end point of each main field magnet in the circumferential direction of the second rotor in parallel with the magnetic pole direction of each main field magnet and a line that extends inward or outward in the second rotor from the other end point of each main field magnet in the circumferential direction of the second rotor in parallel with the magnetic pole direction each main field magnet.

3. The vehicle drive apparatus according to Claim 1 or 2, wherein each sub-field magnet is provided inside of each main field magnet in the radial direction.

4. The vehicle drive apparatus according to Claim 1 or 2, wherein each sub-field magnet is provided outside each main field magnet in the radial direction.

5. The vehicle drive apparatus according to any one of Claims 1 to 4, wherein each main field magnet comprises a plurality of magnets and is provided such that at least two of the magnets adjacent to each other are disposed without a space therebetween.

6. The vehicle drive apparatus according to any one of Claims 1 to 5, wherein each main field magnet comprises a plurality of magnets and is provided such that at least two of the magnets adjacent to each other are linearly disposed.

7. The vehicle drive apparatus according to any one of Claims 1 to 5, wherein each main field magnet comprises a plurality of magnets and is provided such that at least two of the magnets adjacent to each other are non-linearly disposed.
